# EUROPÄISCHE PATENTSCHRIFT

(11) **EP 0 670 762 B1**
(45) Veröffentlichungstag und Bekanntmachung des Hinweises auf die Patenterteilung: **30.10.1996**
(21) Anmeldenummer: 93924527.0
(22) Anmeldetag: 19.11.1993
(51) Int. Cl.: B25J 15/10, B25B 1/24

(54) **HANDHABUNGSVORRICHTUNG ZUM MECHANISCHEN GREIFEN, HALTEN, BEWEGEN ODER DERGL. HANDHABEN VON GEGENSTÄNDEN INSBESONDERE FÜR HANDHABUNGSGERÄTE**
HANDLING DEVICE FOR MECHANICALLY GRIPPING, HOLDING, MOVING OR OTHERWISE HANDLING OBJECTS, IN PARTICULAR FOR HANDLING EQUIPMENT
DISPOSITIF DE MANIPULATION PERMETTANT DE SAISIR, DE TENIR, DE DEPLACER OU BIEN DE MANIPULER DE MANIERE ANALOGUE, MECANIQUEMENT, DES OBJETS, NOTAMMENT POUR DES APPAREILS DE MANIPULATION

(30) Priorität: 26.11.1992 DE 4239649
(43) Veröffentlichungstag der Anmeldung: 13.09.1995
(73) Patentinhaber: SEHRT, Friedhelm, D-45470 Mülheim (DE)
(72) Erfinder: SEHRT, Friedhelm, D-45470 Mülheim (DE)
(86) Internationale Anmeldenummer: DE9301102
(87) Internationale Veröffentlichungsnummer: WO9412323

(56) Entgegenhaltungen:
- EP-A- 0 328 740
- DE-A- 2 823 584
- DE-A- 3 812 155
- FR-A- 2 221 237
- GB-A- 2 148 239
- US-A- 2 486 494
- US-A- 4 572 564
- MACHINERY AND PRODUCTION ENGINEERING Bd. 141, Nr. 3638 , November 1983 , SILVER END , WITHAM ,GB Seite 55 KNIGHT 'Pick -up device needs no power'

## Beschreibung

Die Erfindung betrifft eine Handhabungsvorrichtung zum mechanischen Greifen, Halten, Bewegen oder dergl. Handhaben von Gegenständen insbesondere für Handhabungsgerate z.B. Industrieroboter.

Das Greifen und Handhaben beliebig geformter Gegenstände aus unterschiedlichen Werkstoffen in lagebestimmter oder lageunbestimmter Position ist eine zentrale und schwierige Aufgabe in der Handhabungstechnologie.

Bekannt sind eine Vielzahl mechanischer Zwei- oder Mehrfingergreifer mit einem hohen Aufwand für die notwendige Greifbewegung mit vielen Hebel-, Lager-, Arbeits-, Steuer- und Signalelementen, die nur lagebestimmte Gegenstände eines sehreingeschränkten Formenbereiches greifen und handhaben können.

Weiter bekannt sind z.B. Sauggreifer mit einem hohen maschinellen Aufwand zur Erzeugung des Vakuums, die wiederum nur lagebestimmte Gegenstände mit relativ großen, nicht porösen und glatten Oberflächen greifen und handhaben können.

Weiter bekannt sind z.B. Magnetgreifer, die nur Gegenstände aus magnetischen Werkstoffen greifen und handhaben können.

Alle bekannten Greifersysteme haben den Nachteil, daß sie nur für spezielle und lagebestimmte Gegenstände entwickelt wurden und dann auch nur diese greifen und handhaben können. Bei einem Wechsel zu anderen Gegenständen oder einer anderen Lage der Gegenstände müssen die bekannten Greifersysteme entsprechend umgerüstet, umgebaut, ausgetauscht oder sogar neu konstruiert und gebaut werden.

Die heute geforderte hohe Flexibilität bei Handhabungssystemen mit automatischer und schneller Anpassung an unterschiedliche Teilespektren wird mit den bekannten Greifersystemen nicht erreicht.

Um Gegenstände mit unterschiedlicher Gestalt greifen zu können sind bereits Greifgeräte vorgeschlagen worden ( DD 282874 ), die aus einem Grundkörper bestehen, in dem Stifte schräg zur Mittelachse und Bewegungsrichtung verschiebbar angeordnet sind. Beim Annähern des Gerätes an einen Gegenstand soll mittels dieser schrägen Stifte in einer ersten Phase je nach Winkellage entweder nur die Innen- oder nur die Außenkontur des Gegenstandes abgeformt werden. In einer zweiten Phase soll durch zusätzlicher Beaufschlagung der Stifte mit einer Hilfskraft der Gegenstand festgehalten werden.

Mit derartigen Geräten soll ein eingeschränktes Teilespektrum ähnlich geformter kleiner bis mittlerer Teile erfaßt werden, deren Lage zur Greiferachse außerdem genau festliegt. Solche Geräte sind objektangepaßt und wenig flexibel. Da außerdem zur Erzeugung der Hilfskraft besonderer Aufwand getrieben werden muß und kein Lösemechanismus exstiert, haben sich diese Geräte in der Praxis als nicht geeignet erwiesen.

Der vorliegenden Erfindung liegt die Aufgabe zugrunde, Gegenstände beliebiger Geometie und Größe aus unterschiedlichen Werkstoffen in lagebestimmter oder lageunbestimmter Position, einzeln oder zu mehreren mit einer einzigen Vorrichtung zu greifen und zu handhaben, wobei die Anpassung an unterschiedliche Gegenstände zur Klemmung gleichzeitig sowohl an der Innen- wie Außenkontur durch Reib- und gegebenenfalls Formschluß automatisch ohne Hilfskräfte erfolgt und ein Ausstoß der Teile lagegenau gewährleistet ist.

Diese Aufgabe wird erfindungsgemäß durch die Merkmale von Patentanspruch 1 gelöst.

Die mit der Erfindung erzielbaren Vorteile liegen insbesondere darin, daß diebeschriebene Handhabungsvorrichtung ohne Einstellung und Umbau beliebig geformte Gegenstände aus gleichen oder unterschiedlichen Werkstoffen, einzeln oder zu mehreren, aus lagebestimmter oder lageunbestimmter Position, auch aus einem Haufwerk oder aus ungeordneter Anordnung aus einem Behälter greifen und handhaben kann.

Die Anpassung der Handhabungsvorrichtung an die unterschiedlichen Formen der Gegenstände zur Klemmung erfolgt sowohl an der Innen- wie Außerkontur durch Reib- und gegebenfalls Formschluß automatisch. Hat die Handhabungsvorrichtung einen oder mehrere Gegenstände bestimmungsgemäß erfaßt, so kann automatisch ein Sensor den Greiferfolg überwachen und ein Handhabungsgerät ansteuern.

In der Ablegeposition werden die Teile aus der Vorrichtung lagegenau abgelegt, da sie unter Beibehaltung des Formschlusses aus der Vorrichtung gedrückt werden. Hohe Flexibilität beim Greifen und Handhaben von Gegenständen wird mit der beschriebenen Handhabungsvorrichtung insbesondere bei Handhabungsgeräten z.B. Industrierobotern erreicht.

Diese Handhabungsvorrichtung ist aber auch als Handgerät in vielen Anwendungsfällen nützlich, wenn es z.B.um die Handhabung heißer, toxischer oder strahlender Gegenstände geht.

In der Zeichnung sind Ausführungsbeispiele der Erfindung dargestellt. Es zeigen:
- Fig. 1: die Handhabungsvorrichtung in der Seitenansicht (Schnitt) mit gleichzeitig zu erfassenden Gegenständen;
- Fig. 2: die Handhabungsvorrichtung nach Fig. 1 in der Draufsicht (Schnitt);
- Fig. 3: die Handhabungsvorrichtung nach Fig. 1 über-den Gegenständen;
- Fig. 4: die Handhabungsvorrichtung nach Fig. 1 auf die Gegenstände zur Aufnahme abgesenkt;
- Fig. 5: die Handhabungsvorrichtung nach Fig. 1, die Gegenstände tragend;
- Fig. 6: die Seitenansicht von vier unterschiedlich ausgestalteten Haltestiften;
- Fig. 7: die Draufsicht auf ein vierteiliges Handhabungsvorrichtungssystem, bestehend aus vier Einzelvorrichtungen nach Fig. 1 bis 5;
- Fig. 8: die Handhabungsvorrichtung nach Fig. 1 zusätzlich mit einem Vibrator;
- Fig. 9: die Handhabungsvorrichtung mit einem Einschubgerät;
- Fig. 10: eine zweiteilige Handhabungsvorrichtung, bestehend aus einer äußeren Ringvorrichtung II und einer inneren Kernvorrichtung I in der Draufsicht;
- Fig. 11: die zweiteilige Handhabungsvorrichtung nach Fig. 1 bis 5 in der Seitenansicht;
- Fig. 12: eine zweiteilige Handhabungsvorrichtung in der Draufsicht mit Tragarm und beweglichen Schlitten;
- Fig. 13: eine zweiteilige Handhabungsvorrichtung in der Draufsicht mit Tragarm und Schwenkarmen;
- Fig. 14: die Draufsicht auf eine Spannplattenanordnung mit vier Spannplatten;
- Fig. 15: die Draufsicht auf eine Spannplattenanordnung mit zwei verdrehbaren Spannplatten;
- Fig. 16: die Handhabungsvorrichtung nach Fig. 1, zusätzlich ausgestattet mit Schaltsensorplatte, Schaltsensoren, Kraftmeßsensor mit Befestigungsflansch und Steckverbindung;
- Fig. 17: die Handhabungsvorrichtung zur manuellen Handhabung mit Auswerferhandhebel und Gehäuse mit Griff;
- Fig. 18: die Handhabungsvorrichtung mit objektangepaßten Haltestiften und Auswerfereinrichtung.

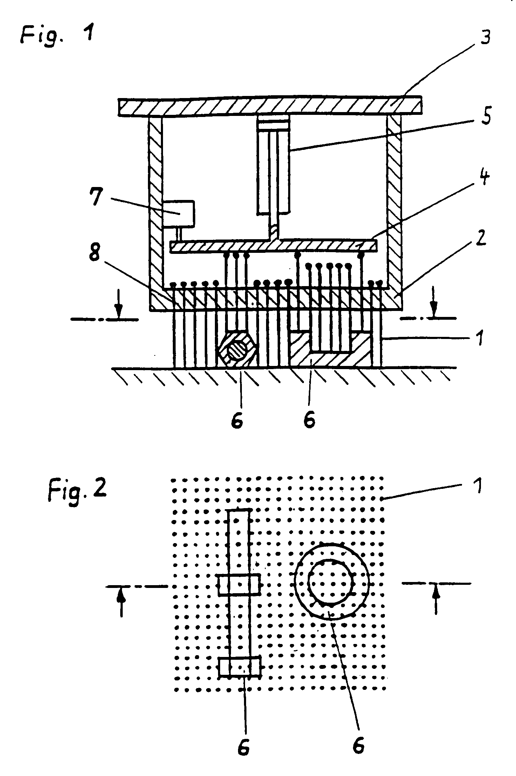

Fig. 1 zeigt die einzelnen Elemente der Handhabungsvorrichtung in der Seitenansicht (Schnitt). Die Haltestiftführungsplatte 2 ist mit der Befestigungsplatte 3 verbunden, die wiederum von Hand oder durch ein Handhabungsgerät z.B. einem Industrieroboter bewegt wird. In der Haltestiftführungsplatte 2 sind in einer Vielzahl von Bohrungen 8 Haltestifte 1 längsverschieblich angeordnet.

Oberhalb der Haltestifte 1 ist die Auswerferplatte 4 mittels eines nicht näher beschriebenen Auswurfgerätes 5 auf die Haltestifte absenkbar.

Bewegt man die Befestigungsplatte 3 mit der Haltestiftführungsplatte 2 auf die zu handhabenden Gegenstände 6, die z.B. auf einem Tisch liegen, so wird ein Teil der Haltestifte 1 von der Oberfläche der Gegenstande 6 in den Bohrungen 8 relativ zur Haltestiftführungsplatte 2 verschoben, wodurch auch die Auswerferplatte 4 zurückgedrückt wird. Hierdurch kann ein Schalter 7 betätigt werden, der das Signal zur Beendigung der Senkbewegung gibt.

Durch die Vielzähl der Haltestifte 1 bedingt werden immer einige Haltestifte 1 in so günstiger Position tangential zur Oberfläche der Gegenstände 6 sein, daß sie federnd ausweichen und die Gegenstände durch Kraftschluß und/oder bei entsprechender Ausbildung der Haltestifte 1 auch durch Formschluß klemmen und halten zum weiteren Handhaben.

Die geklemmten Gegenstände 6 werden durch Zurückschieben der Haltestifte 1 mit der Auswerferplatte 4 wieder gelöst.

Fig. 2 zeigt die Handhabungsvorrichtung nach Fig. 1 in der Draufsicht (Schnitt) mit zwei verschiedenen Gegenständen 6 in der Klemmposition.

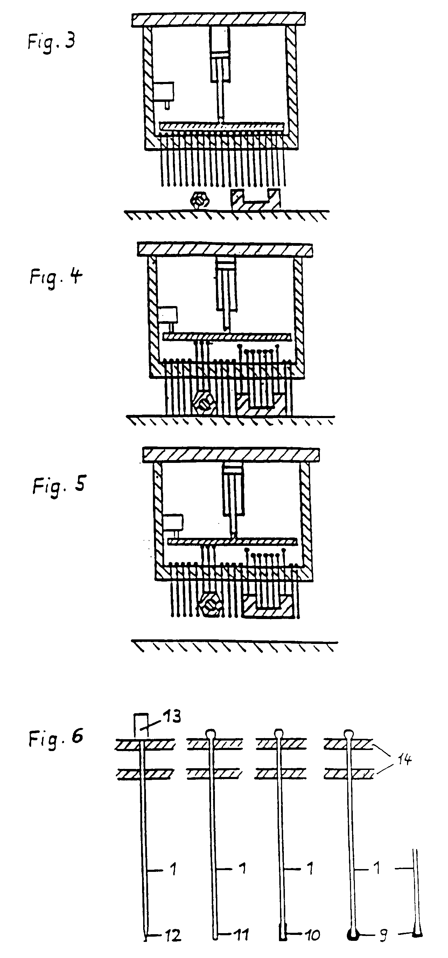

Die Fig. 3 bis 5 zeigen die einzelnen Bewegungsphasen der Handhabungsvorrichtung nach Fig. 1 beim Aufnehmen und wieder Ablegen von Gegenständen.

Fig. 3 zeigt die Handhabungsvorrichtung über den zu handhabenden Gegenständen 6 vor dem Aufnehmen bzw. nach dem Ablegen derselben.

Fig. 4 zeigt die Handhabungsvorrichtung auf die Gegenstände 6 zur Aufnahme abgesenkt. Die Auswerferplatte 4 wurde durch die Haltestifte 1 zurückgedrückt und der Schalter 7 ist betätigt und gibt ein Signal zum Anheben der Handhabungsvorrichtung.

Sind die Gegenstände 6 beim Anheben nicht gefaßt, so sinkt die Auswerferplatte wieder ab und der Schalter 7 bleibt unbetätigt.

Dies kann für die Steuerung des Handhabungsgerätes z.B. das Signal sein, den Greifvorgang zu wiederholen oder abzubrechen.

Fig. 5 zeigt die Handhabungsvorrichtung mit angehobenen Gegenständen 6 in Verfahrposition. Sollen die Gegenstände 6 nach erfolgter Bewegung wieder abgelegt werden, so wird das Auswurfgerät 5 betätigt, die Auswerferplatte 4 wird nach unten bewegt und drückt die Haltestifte 1 und damit die Gegenstände 6 heraus und die Position der Fig. 3 ist wieder erreicht.

In der Figur 6 werden verschiedene Ausbildungsformen der Haltestifte 1 dargestellt mit Spitzen 12, mit Zylinderform 11, mit Reibbelag 10 und mit Formelement 9 am unteren Ende.
Je nach den zu handhabenden Gegenständen werden die geeigneten Haltestifte 1 ausgewählt. Bei den Haltestiften mit Formelementen 9 und Reibbelag 10 werden die Gegenstände 6 neben dem Reibschluß gegebenenfalls auch durch Formschluß gehalten. Die Verdickungen 13 haben die Aufgabe, die Haltestifte 1 axial in einer Richtung festzulegen und gleichzeitig wird durch die Erhöhung der Gewichtskraft die Klemmkraft der Haltestifte auf die Gegenstände erhöht. In Fig. 6 ist außerdem die Ausführung einer zweiteiligen Haltstiftführungsplatte 14 in Parallelanordnung gezeigt.

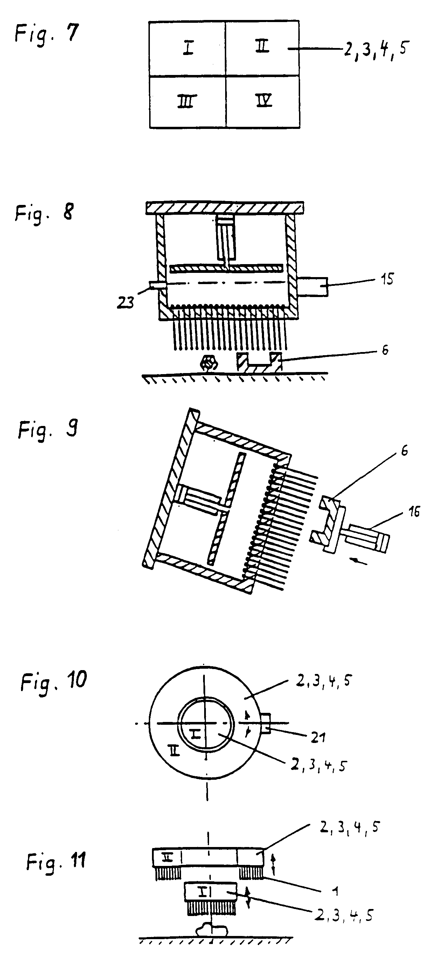

Fig. 7 zeigt die Draufsicht auf ein vierteiliges Handhabungsvorrichtungssystem, bestehend aus vier Handhabungsvorrichtungen I bis IV nach Fig. 1 bis 5 zum gleichzeitigen oder zeitversetzten Greifen von Gegenständen 6 von unterschiedlichen Plätzen und zum wahlweisen gleichzeitigen oder zeitversetzten Ablegen der Gegenstände an einem oder an mehreren Plätzen.

Die einzelnen Handhabungsvorrichtungen I bis IV können im System parallel oder leicht geneigt zueinander ausgeführt werden, um gemeinsam einen oder mehrere Gegenstände zu erfassen. Außerdem können sie aus jeweils gleichen oder auch unterschiedlichen Haltestiften 1 oder Haltstiftanordnungen bestehen, damit ein optimales Erfassen der Gegenstände erreicht wird.

Hierdurch können die Verfahrwege insbesondere bei Handhabungsgeräten z.B. Industrierobotern bei dieser Systemanordnung durch die Möglichkeit des jederzeitigen Greifens und Ablegens unterschiedlicher Gegenstände einzeln oder zu mehreren wesentlich verkürzt werden.

Fig. 8 zeigt eine Handhabungsvorrichtung nach Fig. 1, die zusätzlich mit einem Vibrator 15 ausgestattet ist. Bei manchen Gegenständen 6 wird die Klemmwirkung durch Vibration erhöht.

Weiter ist eine Lichtschranke 23 dargestellt, die ein Signal an die Steuerung des Handhabungsgerätes gibt, sobald die Haltestifte durch die Gegenstände relativ zur Haltestiftführungsplatte längsverschoben werden und mit den oberen Enden in den Strahlengang gelangen.

Fig. 9 zeigt eine Handhabungsvorrichtung nach Fig. 1, wobei der zur greifende Gegenstand durch ein Einschubgerät 16 in die Handhabungsvorrichtung eingesteckt wird. Das Einstecken eines Gegenstandes in die Handhabungsvorrichtung kann auch von Hand erfolgen.

Fig. 10 zeigt eine zweiteilige Handhabungsvorrichtung, ähnlich wie in Fig. 1 bis 5 beschrieben, bestehend aus einer äußeren Ringvorrichtung II und einer inneren Kernvorrichtung I in der Draufsicht.

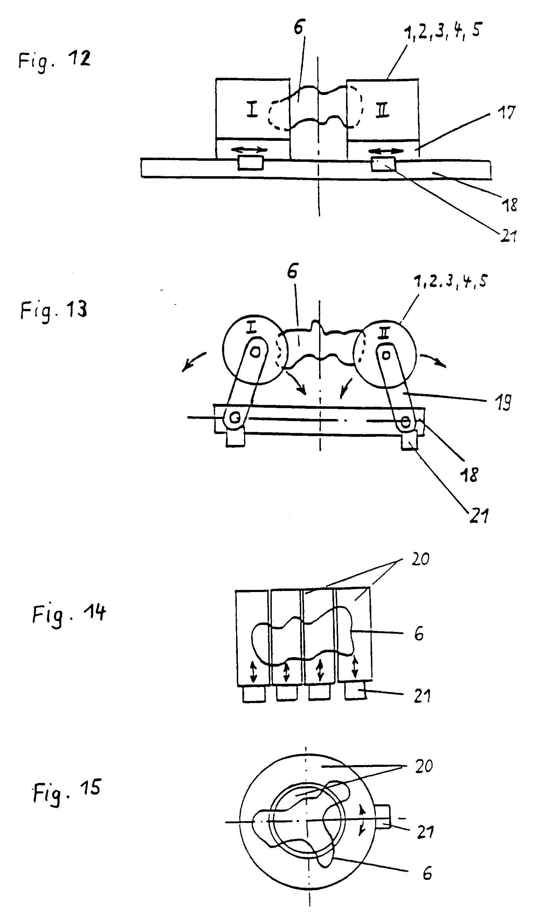

Fig. 11 zeigt die zweiteilige Handhabungsvorrichtung nach Fig. 13 in der Seitenansicht, wobei beide Vorrichtungen I und II axial unabhängig voneinander beweglich gelagert sind, ohne sich gegenseitig zu behindern. Diese Kombination von zwei oder mehreren Handhabungsvorrichtungen hat den Vorteil, daß bei Aktivierung nur der Kernvorrichtung I kleine Gegenstände 6 erfaßt werden und beim Einsatz beider Vorrichtungen I und II größere oder mehrere Gegenstände aufgenommen werden.

Werden die Handhabungsvorrichtungen I und II nach Fig. 13 unabhängig voneinander gegensinnig drehbar gelagert und entsprechend vom nicht näher dargestellten Antriebsgerat 21 angetrieben, so können nach dem Absenken der Handhabungsvorrichtungen auf größere Gegenstände 6, deren äußeren Konturen beiden Haltestiftbereichen I und II angehören, diese bei Drehung durch die gegensinnig bewegten Haltestifte 1 zusätzlich gespannt werden.

Fig. 12 zeigt eine zweiteilige Handhabungsvorrichtung in der Draufsicht mit einem Tragarm 18 auf dem zwei Schlitten 17 mit jeweils einer Handhabungsvorrichtung nach Fig. 1 bis 8 befestigt sind. Der Vorteil dieser zweiteiligen Handhabungsvorrichtung liegt darin, daß beim Greifen größerer Gegenstände 6 eine Haltestiftanordnung nur an bestimmten Konturelementen der Außenkontur zur Klemmung benötigt wird. Die Schlitten werden von den Antriebsgeraten 21 angetrieben und bewegen hierzu die Handhabungsvorrichtungen I und II in die entsprechenden Positionen.

Hierdurch wird die Anzahl der benötigten Haltestifte stark reduziert. Durch die Bewegung der Schlitten kann außerdem die Innen- oder Außenklemmung der Gegenstände 6 erhöht werden.

Fig. 13 zeigt eine zweiteilige Handhabungsvorrichtung in der Draufsicht mit einem Tragarm 18, auf dem zwei Schwenkarme (19) befestigt sind, die jeweils eine Handhabungsvorrichtung nach Fig. 1 bis 8 tragen. Der Vorteil dieser zweiteiligen Handhabungsvorrichtung ist im Prinzip der gleiche wie bereits unter Fig. 12 beschrieben, nur daß die Schritten 17 durch Schwenkarme 19 ersetzt werden.

Fig. 14 zeigt eine Spannplattenanordnung in der Draufsicht mit vier Spannplatten 20, die parallel zueinander jeweils gegensinnig bewegt werden durch die nicht näher beschriebenen Antriebsgerate 21. Hierdurch werden auch die Halte-stifte 1 in den vier Zonen gegensinnig parallel bewegt zur besseren Klemmung der Gegenstände 6.

Fig. 15 zeigt eine Spannplattenanordnung in der Draufsicht mit zwei Spannplatten 20, die gegeneinander verdreht werden durch die nicht näher beschriebenen Antriebsgerate 21. Hierdurch werden die Haltestifte 1 in den zwei Zonen gegeneinander verdreht zur besseren Klemmung der Gegenstände 6.

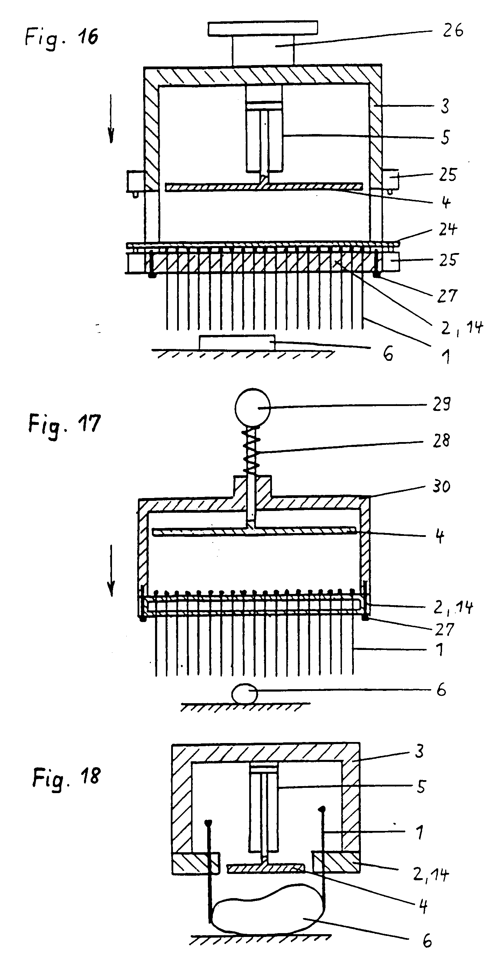

Fig. 16 zeigt die Handhabungsvorrichtung über einem Gegenstand 6 mit Schaltsensorplatte 24, die auf den Haltestiften 1 aufliegt. In dieser Stellung sind die unteren Schaltsensoren 25 betätigt, wodurch der Steuerung eines Handhabungsgerätes signalisiert wird, daß kein Gegenstand gefaßt ist. Wird die Handhabungsvorrichtung auf den Gegenstand 6 zu bewegt, so werden die Haltestifte mit der Schaltsensorplatte 24 solange nach oben verschoben, bis die oberen, einstellbaren Schaltsensoren 25 erreicht sind und somit der Steuerung des Handhabungsgerätes wegabhängig signalisiert wird, daß ein Gegenstand 6 gefaßt ist. Durch die Auswerferplatte 4 mit Auswurfgerät 5 werden die Schaltsensorplatte 24 und die Haltestifte 1 in die gezeichnete Anfangsstellung gebracht, wodurch der Gegenstand 6 wieder ausgestoßen und abgelegt wird. Die Handhabungsvorrichtung hat außerdem auch noch einen Kraftsensor mit Befestigungsflansch 26, wodurch auch bei Bedarf eine kraftabhängige Steuerung eines Handhabungsgerätes bei der Aufnahme des Gegenstandes 6 ermöglicht wird. Über die Steckverbindung 27 sind die Haltestiftführungsplatten 2,14 leicht auszutauschen.

Fig. 17 zeigt eine handbetätigte Handhabungsvorrichtung über einem Gegenstand 6. Wird die Handhabungsvorrichtung auf den Gegenstand 6 abgesenkt, so wird der Gegenstand 6 von den Haltestiften 1 geklemmt und kann aufgenommen werden. Über den Auswerferhandhebel 29 kann mit der Auswerferplatte 4 der gefaßte Gegenstand 6 gelöst und abgelegt werden.

Fig. 18 zeigt eine Handhabungsvorrichtung mit nur zwei Haltestiften 1, die in günstiger Gegenstandkonturposition angeordnet sind und den Gegenstand 6 klemmen und halten. Durch die Auswerferplatte 4 mit Auswurfgerät 5 wird der Gegenstand 6 wieder gelöst.

## Patentansprüche

1. Handhabungsvorrichtung zum mechanischen Greifen von Gegenständen, für Handhabungsgeräte mit einer Haltestiftführungsplatte (2), welche mit einer Befestigungsplatte (3) verbunden und durch eine Senkbewegung auf die zu erfassenden Gegenstände zu bewegbar ist, dadurch gekennzeichnet, daß die Haltestiftführungsplatte (2) mit einer Vielzahl von vertikalen dichtbeieinander angeordneten parallelen Bohrungen (8) versehen ist, daß in den Bohrungen nach unten frei herausragend, runde oder mehrkantige Haltestifte (1) längsverschieblich geführt sind, deren untere, den Gegenstand (6) tangierende Enden (9, 10, 11, 12) zu den Konturbereichen des Gegenstandes (6) durch elastische Verformung der Haltestifte (1) bei Annäherung in einen Reibschluß und gegebenenfalls zu Formschluß gelangen und damit den Gegenstand festklemmen und oberhalb der Haltestiftführungsplatte (2, 14) eine auf diese mittels eines Auswurfgerätes (5) absenkbare Auswerferplatte (4) angeordnet ist.

2. Handhabungsvorrichtung nach Anspruch 1, dadurch gekennzeichnet, daß durch die Auswerferplatte (4) ein Schalter (7) zur Ansteuerung eines Handhabungsgerätes betätigbar ist.

3. Handhabungsvorrichtung nach den Ansprüchen 1 und 2, dadurch gekennzeichnet, daß die Haltestifte (1) parallel in beliebig angeordneten Bohrungen (8) z.B. in Reihen, spiralförmig oder konzentrisch längsverschieblich geführt sind.

4. Handhabungsvorrichtung nach den Ansprüchen 1 bis 3, dadurch gekennzeichnet, daß die unteren Enden der Haltestifte mit Spitze (12) versehen sind.

5. Handhabungsvorrichtung nach den Ansprüchen 1 bis 4, dadurch gekennzeichnet, daß die unteren Enden der Haltestifte (1) mit Formelementen (9) versehen sind.

6. Handhabungsvorrichtung nach den Ansprüchen 1 bis 5, dadurch gekennzeichnet daß die unteren Enden der Haltestifte (1) mit einer Reibbelagschicht (10) versehen sind.

7. Handhabungsvorrichtung nach den Ansprüchen 1 bis 6, dadurch gekennzeichnet, daß die Haltestifte (1) an den oberen, aus der Haltestiftführungsplatte (2) herausragenden Enden mit Verdickungen (11) versehen sind.

8. Handhabungsvorrichtung nach den Ansprächen 1 bis 7, dadurch gekennzeichnet, daß mehrere Haltestiftführungsplatten (2) mit jeweils gleichen oder auch unterschiedlichen Haltestiftanordnungen und Auswerferplatten zu einer Einheit mit einer Auswerferplatte (4) oder mit mehreren Auswerferplatten (4) parallel oder winklig zueinander zusammenfügbar sind.

9. Handhabungsvorrichtung nach den Ansprüchen 1 bis 8, dadurch gekennzeichnet, daß die Haltestiftführungsplatte zweiteilig (14)ausgeführt ist.

10. Handhabungsvorrichtung nach den Ansprüchen 1 bis 9, dadurch gekennzeichnet, daß sie mit einem Vibrator (15) ausgestattet ist.

11. Handhabungsvorrichtung nach den Ansprüchen 1 bis 10, dadurch gekennzeichnet, daß die Gegenstande (6) von Hand oder von einem Einschubgerät (16) in beliebiger Winkellage zwischen vertikal und horizontal in die Haltestiftgruppe zur weiteren Handhabung eingesteckt werden.

12. Handhabungsvorrichtung nach den Ansprüchen 1 bis 11, dadurch gekennzeichnet, daß zwei oder mehrere Haltestiftführungsplatten (2, 14) konzentrisch und getrennt axial verschiebbar mit jeweils gleichen oder unterschiedlichen Haltestiftanordnungen und zu einer Einheit mit einer Auswerferplatte (4) oder mit mehreren Auswerferplatten (4) zusammenfügbar sind.

13. Handhabungsvorrichtung nach den Ansprüchen 1 bis 12, dadurch gekennzeichnet, daß zwei oder mehrere Haltestiftführungsplatten konzentrisch und getrennt gegeneinander verdrehbar mit jeweils gleichen oder unterschiedlichen Haltestiftanordnungen und zu einer Einheit mit Auswerferplatte (4) oder mit mehreren Auswerferplatten (4) zusammenfügbar sind.

14. Handhabungsvorrichtung nach den Ansprüchen 1 bis 13, dadurch gekennzeichnet, daß zwei oder mehrere Haltestiftführungsplatten (2) an Schlitten (17) befestigt sind, die relativ zum Tragarm (18) von Hand oder angetrieben von Antriebsgeräten (21) verfahrbar sind.

15. Handhabungsvorrichtung nach den Ansprüchen 1 bis 14, dadurch gekennzeichnet, daß zwei oder mehrere Haltestiftführungsplatten (2) an Schwenkarmen (19) befestigt sind, die relativ zum Tragarm (18) von Hand oder angetrieben von Antriebsgeraten (21) geschwenkt werden können.

16. Handhabungsvorrichtung nach den Ansprüchen 1 bis 15, dadurch gekennzeichnet, daß eine oder mehrere Spannplatten (20) durch ein oder mehrere Antriebsgeräte (21) relativ zur Haltestiftführungsplatte (2, 14) parallel gegensinnig bewegbar sind.

17. Handhabungsvorrichtung nach den Ansprüchen 1 bis 16, dadurch gekennzeichnet, daß eine oder mehrere Spannplatten (20) durch ein oder mehrere Antriebsgeräte (21) relativ zur Haltestiftführungsplatte (2, 14) verdrehbar bewegbar sind.

18. Handhabungsvorrichtung nach den Ansprüchen 1 bis 17, dadurch gekennzeichnet, daß an der Haltestiftführungsplatte(2, 14) eine Lichtschranke (23) angebracht ist, die ein Signal gibt, sobald Haltestifte mit dem oberen Ende in den Strahlengang gelangen.

19. Handhabungsvorrichtung nach den Ansprüchen 1 bis 18, dadurch gekennzeichnet, daß eine Schaltsensorplatte (24) lose auf den Haltestiften (1) aufliegt und durch diese zwischen den einstellbaren oberen und unteren Schaltsensoren (25) bewegt wird zur wegabhängigen Steuerung eines Handhabungsgerätes.

20. Handhabungsvorrichtung nach den Ansprüchen 1 bis 19, dadurch gekennzeichnet, daß ein Kraftsensor mit Befestigungsflansch (26) oberhalb der Handhabungsvorrichtung angeordnet ist zur kraftabhängigen Steuerung eines Handhabungsgerätes.

21. Handhabungsvorrichtung nach den Ansprüchen 1 bis 20, dadurch gekennzeichnet, daß die Haltestiftführungsplatte (2,14) durch eine Steckverbindung (27) leicht austauschbar gestaltet ist.

22. Handhabungsvorrichtung nach den Ansprüchen 1 bis 21, dadurch gekennzeichnet, daß nur wenige Haltestifte (1) in günstiger Oberflächenposition des Gegenstandes (6) angeordnet sind und das Auswurfgerät (5) den Gegenstand (6) direkt ausstößt.

23. Handhabungsvorrichtung nach den Ansprüchen 1 bis 22, dadurch gekennzeichnet, daß zur Handbetätigung die Haltestiftführungsplatte (2,14) mit einem Gehäuse mit Griff (30) verbunden ist, in dem der Auswerferhandhebel (29) mit Auswerferplatte (4) geführt ist.

## Claims

1. Handling means to mechanically grip objects for handling devices with a retention pin guide plate (2), which is connected to a fastening plate (3) and may be moved by a lowering movement onto the objects to be grasped, characterised in that the retention pin guide plate (2) is fitted with a plurality of vertical parallel holes (8) arranged closely adjacent to one another; that round or many-sided retention pins (1) freely projecting downwards into the holes are disposed to allow longitudinal displacement, their lower ends (9, 10, 11, 12) at a tangent to the object (6) on approach coming into frictional engagement and possibly forming a form-fit with the contour regions of the object (6) by elastic deformation of the retention pins (1), and an ejection plate (4), which may be lowered onto the retention pin guide plate (2, 14) by means of an ejection device (5), is arranged above said retention pin guide plate.

2. Handling means according to Claim 1, characterised in that a switch (7) may be operated by the ejection plate (4) to actuate a handling device.

3. Handling means according to Claims 1 and 2, characterised in that the retention pins (1) are disposed parallel to allow longitudinal displacement in holes (8) arranged in any desired manner, e.g. in rows, in a spiral shape or concentrically.

4. Handling means according to Claims 1 to 3, characterised in that the lower ends of the retention pins are fitted with points (12).

5. Handling means according to Claims 1 to 4, characterised in that the lower ends of the retention pins (1) are fitted with shaped elements (9).

6. Handling means according to Claims 1 to 5, characterised in that the lower ends of the retention pins (1) are fitted with a friction coating layer (10).

7. Handling means according to Claims 1 to 6, characterised in that the retention pins (1) are fitted with thickened portions (11) at the upper ends projecting from the retention pin guide plate (2).

8. Handling means according to Claims 1 to 7, characterised in that several retention pin guide plates (2) may be joined to one another in a parallel or angular arrangement respectively with the same or also different retention pin arrangements and ejection plates to form a unit with an ejection plate (4) or with several ejection plates (4).

9. Handling means according to Claims 1 to 8, characterised in that the retention pin guide plate is constructed in two parts (14).

10. Handling means according to Claims 1 to 9, characterised in that it is equipped with a vibrator (15).

11. Handling means according to Claims 1 to 10, characterised in that the objects (6) are inserted by hand or by an insertion device (16) into the retention pin group in any desired angular position between the vertical and horizontal for further handling.

12. Handling means according to Claims 1 to 11, characterised in that two or more retention pin guide plates (2, 14) may be joined together concentrically and to allow separate axial displacement with respectively the same or different retention pin arrangements and to form a unit with an ejection plate (4) or with several ejection plates (4).

13. Handling means according to Claims 1 to 12, characterised in that two or more retention pin guide plates may be joined together concentrically and to allow separate relative rotation with respectively the same or different retention pin arrangements and to form a unit with an ejection plate (4) or with several ejection plates (4).

14. Handling means according to Claims 1 to 13, characterised in that two or more retention pin guide plates (2) are fastened on carriages (17) which may be run relative to the support arm (18) by hand or driven by drive devices (21).

15. Handling means according to Claims 1 to 14, characterised in that two or more retention pin guide plates (2) are fastened on swivel arms (19) which may be swivelled relative to the support arm (18) by hand or driven by drive devices (21).

16. Handling means according to Claims 1 to 15, characterised in that one or more clamping plates (20) may be moved parallel in opposing directions relative to the retention pin guide plate (2, 14) by one or more drive devices (21).

17. Handling means according to Claims 1 to 16, characterised in that one or more clamping plates (20) may be moved rotationally relative to the retention pin guide plate (2, 14) by one or more drive devices (21).

18. Handling means according to Claims 1 to 17, characterised in that a light barrier (23) is attached to the retention pin guide plate (2, 14) which gives a signal as soon as retention pins pass into the path of rays at the upper end.

19. Handling means according to Claims 1 to 18, characterised in that a switch sensor plate (24) lies loose on the retention pins (1) and is moved by these between the adjustable upper and lower switch sensors (25) for path-dependent control of a handling device.

20. Handling means according to Claims 1 to 19, characterised in that a power sensor with fastening flange (26) is arranged above the handling means for power-dependent control of a handling device.

21. Handling means according to Claims 1 to 20, characterised in that the retention pin guide plate (2, 14) is constructed to be easily replaceable by a plug connection (27).

22. Handling means according to Claims 1 to 21, characterised in that only a few retention pins (1) are arranged in a favourable surface position of the object (6) and the ejection device (5) ejects the object (6) directly.

23. Handling means according to Claims 1 to 22, characterised in that for hand operation, the retention pin guide plate (2, 14) is connected to a housing with a handle (30) in which the ejector lever (29) is mounted with the ejection plate (4).

## Revendications

1. Dispositif de manipulation pour la préhension mécanique d'objets, pour des appareils de manipulation comprenant une plaque de guidage de goupille de fixation (2) qui est reliée à une plaque de fixation (3) et qui est mobile en direction de l'objet à saisir par un mouvement d'abaissement, caractérisé en ce que la plaque de guidage de goupille de fixation (2) est munie d'un grand nombre de perçages (8) verticaux, parallèles et disposés tout près les uns à côté des autres, en ce que dans les perçages sont guidées, dans le sens de la longueur, des goupilles de fixation (1), rondes ou polygonales et faisant saillie librement vers le bas, dont les extrémités inférieures (9, 10, 11, 12) tangentes par rapport à l'objet (6) parviennent aux zones de contours de l'objet (6) par déformation élastique des goupilles de fixation (1) en s'approchant par friction ou éventuellement par adhérence des formes, serrant ainsi l'objet et en ce qu'au-dessus de la plaque de guidage de goupille de fixation (2, 14) est disposée une plaque d'éjection (4) abaissable au moyen d'un appareil de projection (5).

2. Dispositif de manipulation selon la revendication 1, caractérisé en ce qu'un interrupteur (7) est actionnable par la plaque d'éjection (4) pour la commande d'un appareil de manipulation.

3. Dispositif de manipulation selon les revendications 1 et 2, caractérisé en ce que les goupilles de fixation (1) sont guidées, de manière coulissante longitudinalement, parallèlement dans des perçages (8), disposés de manière quelconque, par exemple en langées, en forme de spirale ou concentriquement.

4. Dispositif de manipulation selon les revendications 1 à 3, caractérisé en ce que les extrémités inférieures des goupilles de fixation sont munies de pointes (12).

5. Dispositif de manipulation selon les revendications 1 à 4, caractérisé en ce que les extrémités inférieures des goupilles de fixation (1) sont munies d'éléments formés (9).

6. Dispositif de manipulation selon les revendications 1 à 5, caractérisé en ce que les extrémités inférieures des goupilles de fixation (1) sont munies d'une couche de garniture à friction (10).

7. Dispositif de manipulation selon les revendications 1 à 6, caractérisé en ce que les goupilles de fixation (1) sont munies, aux extrémités supérieures, faisant saillie de la plaque de guidage de goupille de fixation (2), de grosseurs (11).

8. Dispositif de manipulation selon les revendications 1 à 7, caractérisé en ce que plusieurs plaques de guidage de goupille de fixation (2) peuvent être assemblées avec des dispositions de goupille de fixation identiques ou différentes et des plaques d'éjection en une unité comportant une plaque d'éjection (4) ou plusieurs plaques d'éjection (4) et, ce, parallèlement ou en formant un angle entre elles.

9. Dispositif de manipulation selon les revendications 1 à 8, caractérisé en ce que la plaque de guidage de goupille de fixation est exécutée en deux parties (14).

10. Dispositif de manipulation selon les revendications 1 à 9, caractérisé en ce qu'il est équipé d'un vibrateur (15).

11. Dispositif de manipulation selon les revendications 1 à 10, caractérisé en ce que les objets (6) sont enfichés manuellement ou au moyen d'un appareil d'insertion (16) dans n'importe quelle position angulaire entre la verticale et l'horizontale dans le groupe des goupilles de fixation pour la poursuite de la manipulation.

12. Dispositif de manipulation selon les revendications 1 à 11, caractérisé en ce que deux ou plusieurs plaques de guidage de goupille de fixation (2, 14) sont mobiles, de manière concentrique et axialement séparée, avec des dispositions de goupille de fixation identiques ou différentes et peuvent être assemblées en une unité avec une plaque d'éjection (4) ou avec plusieurs plaques d'éjection (4).

13. Dispositif de manipulation selon les revendications 1 à 12, caractérisé en ce que deux ou plusieurs plaques de guidage de goupille de fixation sont rotatives, de manière concentrique séparément l'une par rapport à l'autre, avec des dispositions de goupille de fixation identiques ou différentes et peuvent être assemblées en une unité avec des plaques d'éjection (4) ou avec plusieurs plaques d'éjection (4).

14. Dispositif de manipulation selon les revendications 1 à 13, caractérisé en ce que deux ou plusieurs plaques de guidage de goupille de fixation (2) sont fixées à des chariots (17) qui sont mobiles manuellement ou par des appareils moteurs (21) par rapport au bras support (18).

15. Dispositif de manipulation selon les revendications 1 à 14, caractérisé en ce que deux ou plusieurs plaques de guidage de goupille de fixation (2) sont fixées à des bras pivotants (19) qui peuvent être pivotés manuellement ou par des appareils moteurs (21) par rapport au bras support (18).

16. Dispositif de manipulation selon les revendications 1 à 15, caractérisé en ce qu'une ou plusieurs plaques de serrage (20) sont mobiles parallèlement en sens inverse par un ou plusieurs appareils moteurs (21) par rapport à la plaque de guidage de goupille de fixation (2, 14).

17. Dispositif de manipulation selon les revendications 1 à 16, caractérisé en ce qu'une ou plusieurs plaques de serrage (20) sont mobiles de manière rotative par un ou plusieurs appareils moteurs (21) par rapport à la plaque de guidage de goupille de fixation (2, 14).

18. Dispositif de manipulation selon les revendications 1 à 17, caractérisé en ce que sur la plaque de guidage de goupille de fixation (2, 14) est placé un barrage photo-électrique (23) qui émet un signal dès que des goupilles de fixation parviennent par l'extrémité supérieure dans la trajectoire du rayon.

19. Dispositif de manipulation selon les revendications 1 à 18, caractérisé en ce qu'une plaque de capteur de commande (24) repose librement sur les goupilles de fixation (1) et est déplacée par ces dernières entre les capteurs réglables de commande (25) inférieurs et supérieurs, en vue de la commande d'un appareil de manipulation dépendant de la trajectoire.

20. Dispositif de manipulation selon les revendications 1 à 19, caractérisé en ce qu'un capteur de force est disposé au-dessus du dispositif de manipulation au moyen d'une bride de fixation (26) pour la commande de l'appareil de manipulation dépendant de la force.

21. Dispositif de manipulation selon les revendications 1 à 20, caractérisé en ce que la plaque de guidage de goupille de fixation (2, 14) est facilement interchangeable par une connexion à fiche (27).

22. Dispositif de manipulation selon les revendications 1 à 21, caractérisé en ce que seulement quelques goupilles de fixation (1) sont disposées dans une position de surface favorable de l'objet (6) et en ce que l'appareil de projection (5) éjecte directement l'objet (6).

23. Dispositif de manipulation selon les revendications 1 à 22, caractérisé en ce que, pour l'actionnement manuel, la plaque de guidage de goupille de fixation (2, 14) est reliée à un boîtier qui est muni d'une poignée (30) dans laquelle est guidé le levier manuel d'éjection (29) par la plaque d'éjection (4).
